# EUROPEAN PATENT SPECIFICATION

(11) **EP 2 589 515 B1**
(45) Date of publication and mention of the grant of the patent: **16.04.2014**
(21) Application number: 12188923.2
(22) Date of filing: 18.10.2012
(51) Int. Cl.: B60R 21/34, B60R 21/0134, B60R 21/01, B60R 19/56, B60R 19/02, B60R 19/40

(54) **Method and system for influencing collision consequences pertaining to a motor vehicle**
Verfahren und System zur Beeinflussung von Kollisionskonsequenzen im Zusammenhang mit einem Kraftfahrzeug
Procédé et système pour influencer les conséquences de collision appartenant à un véhicule à moteur

(30) Priority: 02.11.2011 SE 1151023
(43) Date of publication of application: 08.05.2013
(73) Proprietor: Scania CV AB, 151 87 Södertälje (SE)
(72) Inventor: Henryson, Kjell, 643 30 Vingåker (SE)

(56) References cited:
- DE-A1- 10 240 269
- DE-A1- 10 307 463
- DE-A1-102005 012 719

## Description

### TECHNICAL FIELD

The invention relates to a method for influencing collision consequences pertaining to a motor vehicle. The invention relates also to a system for influencing collision consequences pertaining to a motor vehicle. The invention relates also to a motor vehicle.

### BACKGROUND

To enhance traffic safety, certain vehicles are provided with an automatic brake system to prevent collisions which is adapted to monitoring objects such as unprotected road-users and to automatically braking the vehicle on the basis of its monitoring.

However, situations may occur where despite activation of such an automatic brake system it is not possible to avoid a collision, e.g. in weather conditions with low friction coefficients between carriageway and vehicle. In such situations, heavy vehicles represent a traffic hazard to cars and unprotected road-users.

Heavy vehicles have a large ground clearance which increases the risk of cars and unprotected road-users ending up under such a vehicle. To prevent underruns, such vehicles are provided where appropriate with underrun protection. Heavy vehicles with large ground clearances often require large clearance angles to enable them to negotiate carriageway slopes and depressions. This clearance angle does however entail for example risk of cars and unprotected road-users ending up under such a vehicle.

An example of such a system is described in DE10307463 which refers to a method for monitoring objects in the vehicle's direction of movement as a basis for assessment of collision risk.

Another example is disclosed in DE102005012719 which refers to a safety device with energy absorbing means, where energy absorbing means are adjusted according to collision parameters.

### OBJECTS OF THE INVENTION

One object of the present invention is to propose a method for influencing collision consequences pertaining to a motor vehicle which makes improved traffic safety possible.

A further object of the present invention is to propose a system for influencing collision consequences pertaining to a motor vehicle which makes improved traffic safety possible.

### SUMMARY OF THE INVENTION

These and other objects indicated by the description set out below are achieved by a method, a system and a motor vehicle of the kind indicated in the introduction which further present the features indicated in the characterising part of the attached independent claims. Preferred embodiments of the method and the system are defined in the attached dependent claims.

According to the invention, the object is achieved with a method for influencing collision consequences pertaining to a motor vehicle which comprises the step of monitoring objects in the vehicle's direction of movement as a basis for assessment of collision risk, comprising the step of using said collision risk as a basis for activating protective shielding means in order to alleviate said collision consequences. Improved traffic safety is thus made possible in that where a collision cannot be avoided its consequences are alleviated by the activation of said shielded means.

The method comprises the step of choosing said protective shielding means on the basis of the character of said objects monitored. This makes it possible to apply protective shielding means by type of object, e.g. by activating an energy-absorbing means such as a crash pad in cases where the object is a high vehicle or other obstacle not likely to end up under the vehicle and/or under its front wheels, and by activating a ground clearance reducing means in cases where the object is liable to the risk of ending up under the vehicle or its front wheels, as for example where the object is an unprotected road-user, a lower vehicle such as a car or similar obstacle in the vehicle's path. It is also possible to activate both energy absorbing means and ground clearance reducing means in order to optimise protection for vehicles and colliding objects in collisions.

Furthermore said protective shielding means has an energy-absorbing function in the vehicle's direction of movement, enabling effective alleviation of collision consequences for improved traffic safety.

Furthermore said protective shielding means has a ground clearance reducing function in the vehicle's direction of movement, making it possible to prevent underruns and thereby achieve effective alleviation of collision consequences for improved traffic safety.

In one embodiment of the method, the step of activating said shielding means takes place only when an automatic braking function of the vehicle has been activated. Using the combination of automatic braking and activation of protective shielding means improves traffic safety.

The method also comprises the step of deciding whether a collision is likely, making it possible to avoid unnecessary activation of protective shielding means.

According to the invention, the object is achieved with a system for influencing collision consequences pertaining to a motor vehicle, comprising means for monitoring objects in the vehicle's direction of movement as a basis for assessment of collision risk, comprising means for using said collision risk as a basis for activation of protective shielding means in order to alleviate said collision consequences. This makes improved traffic safety possible in that where a collision cannot be avoided its consequences are alleviated by the activation of said shielding means.

The system further comprises means for determining the character of said objects monitored, and means for choosing said protective shielding means on the basis of the character of said objects monitored. This makes it possible to apply protective shielding means by type of object, e.g. by activating an energy-absorbing means such as a crash pad in cases where the object is a high vehicle or other obstacle not likely to end up under the vehicle, and by activating a ground clearance reducing means in cases where the object is liable to the risk of ending up under the vehicle, as for example where the object is an unprotected road-user, a lower vehicle such as a car or similar obstacle in the vehicle's path. It is also possible to activate both energy absorbing means and ground clearance reducing means in order to optimise protection for vehicles and colliding objects in collisions.

Furthermore said protective shielding means has an energy-absorbing function in the vehicle's direction of movement, enabling effective alleviation of collision consequences for improved traffic safety.

Furthermore said protective shielding means has a ground clearance reducing function in the vehicle's direction of movement, making it possible to prevent underruns and thereby achieve effective alleviation of collision consequences for improved traffic safety.

In one embodiment, the system further comprises means for automatically braking the vehicle, but only when an automatic braking function of the vehicle has been activated. Using the combination of automatic braking and activation of protective shielding means improves traffic safety.

The system also comprises means for deciding whether a collision is likely, making it possible to avoid unnecessary activation of protective shielding means.

### DESCRIPTION OF DRAWINGS

The present invention will be better understood by reading the detailed description set out below in conjunction with the attached drawings, in which the same reference notations pertain to similar items throughout the various views and
Fig. 1 is a schematic sideview of a motor vehicle,
Fig. 2 is a schematic block diagram of a system for influencing collision consequences pertaining to a motor vehicle according to an embodiment of the present invention;
Fig. 3 is a schematic block diagram of a system for influencing collision consequences pertaining to a motor vehicle according to an embodiment of the present invention;
Figs. 4a-b are schematic sideviews of a front portion of a vehicle with a shielding means of the system in respective unactivated and activated states according to the present invention;
Figs. 5a-b are schematic sideviews of a front portion of a vehicle with a shielding means of the system in respective unactivated and activated states according to the present invention; and
Fig. 6 is a schematic block diagram of a method for influencing collision consequences pertaining to a motor vehicle according to an embodiment of the present invention.

### DESCRIPTION OF EMBODIMENTS

The term "link" refers herein to a communication link which may be a physical line such as an opto-electronic communication line, or a non-physical line such as a wireless connection, e.g. a radio link or microwave link.

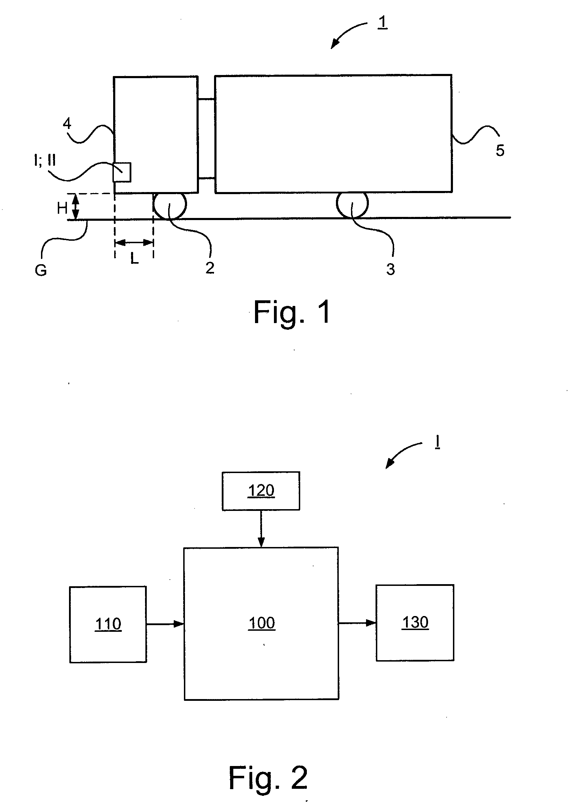

Figure 1 is a side view of a vehicle 1. The vehicle here exemplified is a heavy vehicle in the form of a truck. It might alternatively be a bus or a car. It is provided with a system for influencing collision consequences pertaining to a motor vehicle according to the present invention (depicted in Fig. 2). The vehicle has forward wheels 2 and rear wheels 3. It has a front portion 4 and a rear portion 5. It has in the front portion a certain ground clearance H, i.e. a certain distance H between the lower portion of the front portion and the carriageway G. It has a distance L between the forward wheels 2 and the front portion 4. Said ground clearance H and said distance L between the forward wheels and the front portion result in the vehicle having a certain clearance angle which makes the vehicle operable on, for example, downhill runs which level out or gradients which change from downhill to uphill.

The term "object" refers herein to any object which might be in the vehicle's path such that a collision between the vehicle and the object might cause danger to the object and/or the vehicle. In one variant the object is a movable object or a stationary object. In one variant the object is an unprotected road-user, e.g. a cyclist, motorcyclist, pedestrian or the like. In one variant the object is another vehicle which may be any kind of vehicle, e.g. a heavy vehicle, a car or the like. In one variant the object is a road obstacle such as a fallen tree.

Fig. 2 depicts schematically a system I for influencing collision consequences pertaining to a motor vehicle according to an embodiment of the present invention. The system I is intended to influence collision consequences pertaining to a motor vehicle in such a way as to make improved traffic safety possible according to the present invention.

The system I comprises object detection means 110 adapted to monitoring objects in the vehicle's direction of movement as a basis for assessment of collision risk. In one variant, said object detection means takes the form of a camera unit, radar unit and/or other suitable detector unit.

The system I further comprises collision assessment means 120 for deciding whether a collision is likely. In one variant, said collision detection means comprises information about one or more of the following: distance from object, the vehicle's speed, road state including friction between vehicle wheels and carriageway, and retardation/braking of the vehicle.

The system I further comprises shielding means activation means 130 for activating protective shielding means of the vehicle in order to alleviate said collision consequences.

The system I comprises an electronic control unit 100. This electronic control unit is signal-connected via a link to said object detection means 110 which is adapted to monitoring objects in the vehicle's direction of movement. The electronic control unit is adapted to receiving from said object detection means via the link a signal which represents object detection data.

The electronic control unit 100 is adapted to processing said object detection data in order to identify the object detected.

The electronic control unit 100 is signal-connected via a link to said collision assessment means 120. This electronic control unit is adapted to receiving from said collision assessment means via the link a signal which represents collision risk data.

The electronic control unit 100 is adapted to comparing said collision risk data with predetermined collision risk data.

The electronic control unit 100 is signal-connected via a link to said shielding means activation means 130. The electronic control unit is adapted to sending to said shielding means activation means via the link a signal which represents shielding means activation data to activate shielding means in order to alleviate said collision consequences.

In one embodiment the electronic control unit 100 is adapted, where said collision risk data fulfil specific collision criteria, to sending to said shielding means via the link a signal which represents shielding activation data.

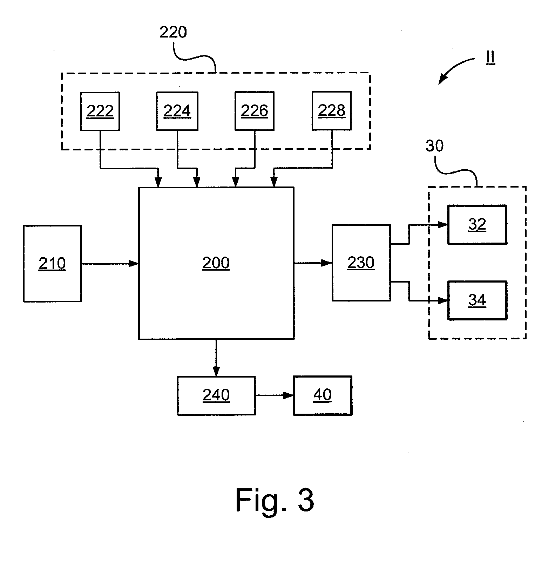

Fig. 3 is a schematic block diagram of a system II for influencing collision consequences pertaining to a motor vehicle which makes improved traffic safety possible according to an embodiment of the present invention.

The system II comprises object detection means 210 adapted to monitoring objects in the vehicle's direction of movement as a basis for assessment of collision risk. In this embodiment said object detection means comprises an object detection camera adapted to detecting objects in the vehicle's direction of movement.

The system II further comprises collision assessment means 220 for deciding whether a collision is likely.

In this embodiment said collision assessment means 220 comprises speed determination means 222 for determining the vehicle's speed relative to its distance from the object in the vehicle's direction of movement.

In this embodiment said collision assessment means 220 further comprises distance assessment means 224 for determining the distance from the object.

In this embodiment said collision assessment means 220 further comprises road state determination means 226 comprising determination of friction between vehicle and carriageway.

In this embodiment said collision assessment means 220 further comprises brake status determination means 228 adapted to monitoring the vehicle's speed decrease/braking/retardation.

The system II further comprises shielding means activation means 230 for activating protective shielding means 30 of the vehicle in order to alleviate said collision consequences.

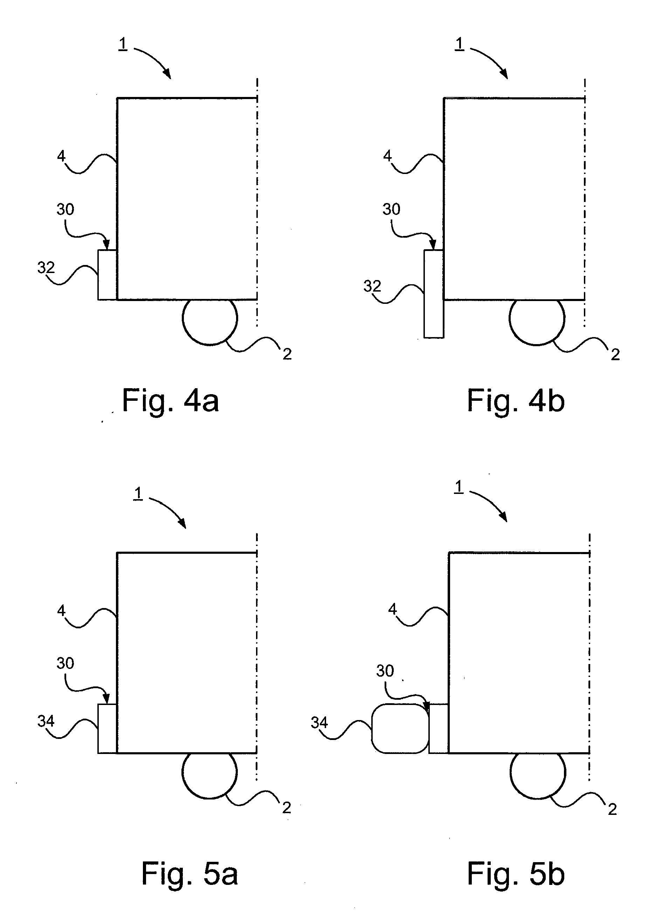

Said shielding means 30 comprise in this embodiment a ground clearance reducing means 32. In one variant, said ground clearance reducing means takes the form of an underrun protection means which is situated close to the front of the vehicle and can be activated to move downwards in order to block space between carriageway and vehicle in response to collision risk assessed by the object detection means where there is risk that the object might end up under the vehicle. Fig. 5a depicts shielding means 30 in the form of ground clearance reducing means 32 in an unactivated state, and Fig. 4b the same means in an activated, i.e. lowered, state.

Said shielding means 30 comprises in this embodiment an energy absorbing means 34. In one variant said energy absorbing means comprises a crash pad which is situated close to the front of the vehicle and can be activated to protrude in response to collision risk assessed by the object detection means. In an alternative or complementary variant, said energy absorbing means takes the form of a bumper means situated close to the front of the vehicle and activated to protrude in response to collision risk assessed by the object detection means. Fig. 5a depicts shielding means in the form of energy absorbing means 34 in an unactivated state, and Fig. 5b the same means in an activated, i.e. protruding, state.

The system II (depicted in Fig. 3) further comprises brake activation means 240 for automatic activation of brake means 40 of the vehicle.

The system II comprises an electronic control unit 200. This electronic control unit is signal-connected via a link to said object detection means 210 which is adapted to monitoring objects in the vehicle's direction of movement. The electronic control unit is adapted to receiving from said object detection means via the link a signal which represents object detection data. The electronic control unit is adapted to processing said object detection data in order to identify the object detected.

The electronic control unit 200 is signal-connected via links to said collision assessment means 220. This electronic control unit is adapted to receiving from said collision assessment means via the links a signal which represents collision risk data.

The electronic control 200 is signal-connected via a link to said speed determination means 222 which is adapted to monitoring the vehicle's speed. The electronic control unit is adapted to receiving from said speed determination means via the link a signal which represents speed data about the vehicle's speed.

The electronic control 200 is signal-connected via a link to said distance assessment means 224 which is adapted to determining the distance from an object in the vehicle's direction of movement. The electronic control unit is adapted to receiving from said distance assessment means via the link a signal which represents distance data about the distance from the object in the vehicle's direction of movement.

The electronic control 200 is signal-connected via a link to said road state determination means 226 which is adapted to monitoring the state of the road along the vehicle's itinerary. The electronic control unit is adapted to receiving from said road state determination means via the link a signal which represents road state data.

The electronic control 200 is signal-connected via a link to said brake status determination means 228 which is adapted to monitoring speed decrease/braking/retardation. The electronic control unit is adapted to receiving from said brake status determination means via the link a signal which represents retardation data.

The electronic control 200 is signal-connected via a link to said brake activation means 240 which is adapted to activating brake means 40 of the vehicle for its automatic braking in response to objects detected in its direction of movement. The electronic control unit is adapted to sending to said brake activation means via the link a signal which represents brake activation data for automatic braking of the vehicle.

In one variant, the electronic control unit 200 is adapted to comparing said speed data with predetermined speed data.

In one variant, the electronic control unit 200 is adapted to comparing said distance data with predetermined distance data.

In one variant, the electronic control unit 200 is adapted to comparing said road state data with predetermined road state data.

In one variant, the electronic control unit 200 is adapted to processing said speed data, distance data and road state data in order to determine said collision risk data.

In one variant, the electronic control unit 200 is adapted to processing said object detection data and collision risk data in order to determine brake activation data.

In one variant, the electronic control unit 200 is adapted to processing said object detection data, collision risk data and brake activation data in order to determine shielding activation data.

The electronic control 200 is signal-connected via a link to said brake activation means 240 which is adapted to activating brake means 40 of the vehicle for its automatic braking in response to objects detected in its direction of movement. The electronic control unit is adapted to sending to said brake activation means via the link a signal which represents brake activation data for automatic braking of the vehicle.

The electronic control unit 200 is signal-connected via a link to said shielding means activation means 230. The electronic control unit is adapted to sending to said shielding means activation means via the link a signal which represents shielding means activation data to activate shielding means in order to alleviate said collision consequences. Said shielding activation data comprise information about objects identified and collision risks.

In one embodiment the electronic control unit 200 is adapted, where said object detection data fulfil specific object detection criteria and said collision risk data fulfil specific collision criteria, to sending to said shielding means activation means 230 via the link a signal which represents shielding activation data.

Said shielding means activation means 230 is adapted to using said shielding activation data as a basis for activating said ground clearance reducing means 32 and/or said energy absorbing means 34.

In one variant said shielding means activation means 230 is adapted to only activating said shielding means 30 when said brake activation means 240 has activated said brake means 40.

Figs. 4a-b are schematic side views of a front portion 4 of a vehicle 1 with a shielding means 30, e.g. as in Fig. 3, in respective unactivated and activated states according to the present invention. In this embodiment the shielding means takes the form of a ground clearance reducing means 32.

Fig. 4a depicts the ground clearance reducing means 32 in an unactivated state and Fig. 4b the same means in an activated, i.e. lowered state.

The ground clearance reducing means 32 is situated in the vehicle's front portion 4 and is activated when an object detected in the vehicle's path is identified as an object which risks ending up under the vehicle or its front wheels, e.g. an unprotected road-user or car, and it is assessed that there is collision risk.

The ground clearance reducing means 32 is arranged to be movable between a first state depicted in Fig. 4a in which it does not reduce the ground clearance, and a second state depicted in Fig. 4b in which it reduces the ground clearance.

The ground clearance reducing means 32 in the first state is arranged to maintain clearance angles which enable the vehicle to negotiate carriageway slopes and depressions so that the ground clearance reducing means does not affect the vehicle's operability.

The ground clearance reducing means 32 in the second state is arranged to prevent objects in the vehicle's path from ending up under the vehicle, by the ground clearance reducing means blocking at least parts of the space close to the vehicle's front portion 4 between the vehicle and the carriageway.

The ground clearance reducing means 32 may be movable between the first and second states in any suitable way. In one variant it is arranged to be unfoldable downwards. In one variant it is arranged to be movable downwards. In one variant it comprises a movable portion arranged for unfolding or moving downwards to achieve said ground clearance reduction.

The ground clearance reducing means 32 may be any suitable means which makes it possible to prevent objects in the vehicle's direction of movement from ending up under the vehicle as a collision consequence and which, when there is no collision risk, does not impair the vehicle's operability, e.g. where downhill runs level out or gradients change from downhill to uphill.

Figs. 5a-b are schematic sideviews of a front portion 4 of a vehicle 1 with a system in respective unactivated and activated states according to the present invention. Fig. 5a depicts shielding means 30 in the form of energy absorbing means 34 in an unactivated state and Fig. 5b the same means in an activated, i.e. protruding, state.

The energy absorbing means 34 is situated in the vehicle's front portion 4 and is activated when an object detected in the vehicle's path is identified as an object which risks colliding with the vehicle, e.g. another heavy vehicle or some other obstacle in the vehicle's path which presents risk to the vehicle in the event of collision.

The energy absorbing means 34 is arranged to be movable between a first state depicted in Fig. 5a in which it substantially does not protrude from the front of the vehicle and its energy absorption capacity is limited, and a second state depicted in Fig. 4b in which it protrudes so that its energy absorption capacity is greater than in the first state.

The energy absorbing means 34 may be movable between the first and second states in any suitable way. In one variant it is arranged to be protrudable in the vehicle's longitudinal direction. In one variant it is arranged to be unfoldable in the vehicle's longitudinal direction.

The energy absorbing means 34 may be any suitable means which makes improved energy absorption possible when there is risk of collision with an object in the vehicle's direction of movement and which, when there is no collision risk, does not unnecessarily protrude from the vehicle's front portion and occupy space. In one embodiment said energy absorbing means takes the form of a crash pad unit. In one embodiment said energy absorbing means takes the form of a bumper unit.

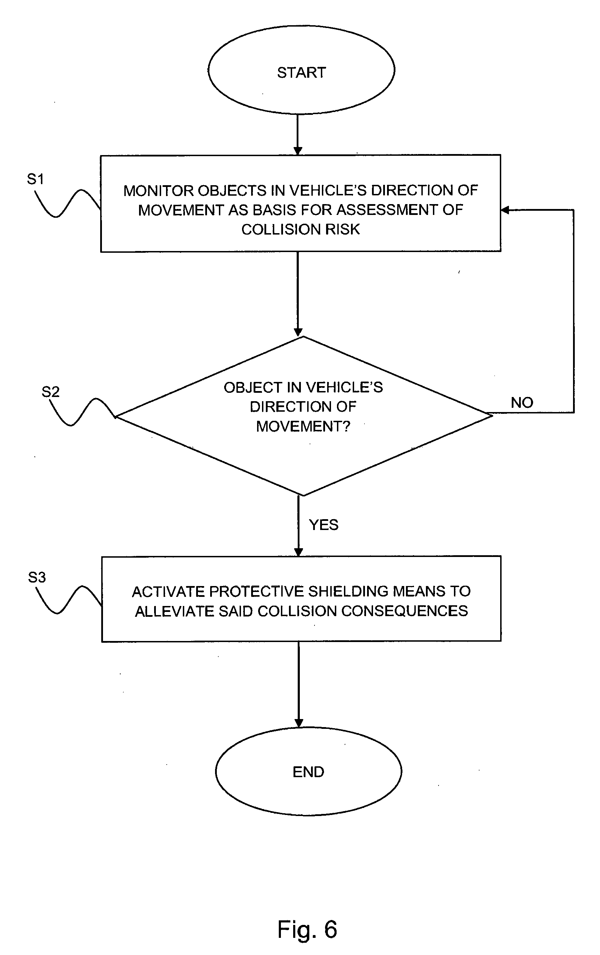

Fig. 6 illustrates schematically a method for influencing collision consequences pertaining to a motor vehicle according to an embodiment of the present invention.

In one embodiment the method for influencing collision consequences pertaining to a motor vehicle comprises a first step S1 in which objects in the vehicle's direction of movement are monitored as a basis for assessment of collision risk.

The step of monitoring objects in the vehicle's direction of movement comprises a second step S2. The method thus comprises a second step S2 which determines whether there is an object in the vehicle's direction of movement.

The method comprises a third step S3 in which protective shielding means is activated to alleviate said collision consequences.

Systems for influencing collision consequences pertaining to a motor vehicle are described above whereby shielding means situated in the vehicle's front portion are configured to be activated on the basis of information about objects in the vehicle's path. In one variant the vehicle has shielding means configured to be activated on the basis of information about objects in the vehicle's path which is also situated in the vehicle's rear portion.

The above description of the preferred embodiments of the present invention is provided for illustrative and descriptive purposes. It is not intended to be exhaustive, nor to limit the invention to the variants described. Many modifications and variations will obviously suggest themselves to one skilled in the art. The embodiments have been chosen and described in order best to explain the principles of the invention and the practical applications thereof and hence make it possible for one skilled in the art to understand the invention for different embodiments and with the various modifications appropriate to the intended use. The invention is defined in the appended claims.

## Claims

1. A method for influencing collision consequences pertaining to a motor vehicle, comprising the step of monitoring (S1) objects in the vehicle's direction of movement as a basis for assessment of collision risk, and using said collision risk as a basis for activating (S3) protective shielding means (30) in order to alleviate said collision consequences, which protective shielding means (30) is situated close to the vehicle's front and/or rear portion, the method further comprising the step of deciding whether a collision is likely by comparing collision risk data with predetermined collision risk data and, when said collision risk data fulfil specified collision criteria, activating said protective shielding means (30) **characterised in that** said protective shielding means (30) comprise energy absorbing means (34) for an energy-absorbing function in the vehicle's direction of movement and ground clearance reducing means (32) for a ground clearance reducing function in the vehicle's direction of movement, the method further comprising the step of choosing between activating said energy-absorbing means and/or activating, said ground clearance reducing means is based on the character of said objects monitored.

2. A method according to claim 1, such that the step of activating said shielding means (30) takes place only when an automatic braking function of the vehicle has been activated.

3. A system (I; II) for influencing collision consequences pertaining to a motor vehicle (1), comprising means for monitoring objects in the vehicle's direction of movement as a basis for assessment of collision risk and protective shielding means (30), and using said collision risk as a basis for activating said protective shielding means (30) in order to alleviate said collision consequences, which protective shielding means (30) is situated close to the vehicle's front and/or rear portion, further comprising means (100; 120; 200; 220) for deciding whether a collision is likely by comparing collision risk data with predetermined collision risk data and, when said collision risk data fulfil specified collision criteria, activating said protective shielding means (30) which system (I; II) is **characterised in that** said protective shielding means (30) comprise energy absorbing means (34) for an energy-absorbing function in the vehicle's direction of movement and ground clearance reducing means (32) for a ground clearance reducing function in the vehicle's direction of movement said system comprises means (100; 110; 200; 210) for determining the character of said objects monitored, means (100; 130; 200; 230) for choosing between activating said energy-absorbing means (34) and/or activating said ground clearance reducing means (32) based on the character of said objects monitored.

4. A system according to claim 3, further comprising means (200; 240) for automatically braking the vehicle, but only when an automatic braking function of the vehicle has been activated.

5. A motor vehicle provided with a system according to any one of claims 3-4.

## Patentansprüche

1. Verfahren zum Beeinflussen von Kollisionsfolgen, welche ein Kraftfahrzeug betreffen, umfassend den Schritt
des Überwachens (S1) von Objekten in der Bewegungsrichtung des Fahrzeugs als Grundlage zur Bewertung einer Kollisionsgefahr, und
des Benutzens der Kollisionsgefahr als Grundlage zum Aktivieren (S3) eines schützenden Abschirmungsmittels (30), um die Kollisionsfolgen zu mildern, wobei sich das schützende Abschirmungsmittel (30) nahe an dem vorderen und/oder hinteren Abschnitt des Fahrzeugs befindet,
wobei das Verfahren weiter den Schritt des Entscheidens umfasst, ob eine Kollision wahrscheinlich ist, durch Vergleichen von Kollisionsgefahrdaten mit vorbestimmten Kollisionsgefahrdaten, und dann,
wenn die Kollisionsgefahrdaten festgelegte Kollisionskriterien erfüllen, des Aktivierens des schützenden Abschirmungsmittels (30),
**dadurch gekennzeichnet, dass** das schützende Abschirmungsmittel (30) ein energieaufnehmendes Mittel (34) mit einer energieaufnehmenden Funktion in der Bewegungsrichtung des Fahrzeugs und ein bodenabstandverminderndes Mittel (32) mit einer bodenabstandvermindernden Funktion in der Bewegungsrichtung des Fahrzeugs umfasst,
wobei das Verfahren weiter den Schritt des Auswählens zwischen Aktivieren des energieaufnehmenden Mittels und/oder Aktivieren des bodenabstandvermindernden Mittels basierend auf der Art der überwachten Objekte umfasst.

2. Verfahren nach Anspruch 1 derart, dass der Schritt des Aktivierens des Abschirmungsmittels (30) nur erfolgt, wenn eine automatische Bremsfunktion des Fahrzeugs aktiviert worden ist.

3. System (I; II) zum Beeinflussen von Kollisionsfolgen, welche ein Kraftfahrzeug (1) betreffen, umfassend
ein Mittel zum Überwachen von Objekten in der Bewegungsrichtung des Fahrzeugs als Grundlage zur Bewertung einer Kollisionsgefahr, und
ein schützendes Abschirmungsmittel (30), und
Benutzen der Kollisionsgefahr als Grundlage zum Aktivieren des schützenden Abschirmungsmittels (30), um die Kollisionsfolgen zu mildern, wobei sich das schützende Abschirmungsmittel (30) nahe an dem vorderen und/oder hinteren Abschnitt des Fahrzeugs befindet, weiter umfassend
Mittel (100; 120; 200; 220) zum Entscheiden, ob eine Kollision wahrscheinlich ist, durch Vergleichen von Kollisionsgefahrdaten mit vorbestimmten Kollisionsgefahrdaten und dann, wenn die Kollisionsgefahrdaten festgelegte Kollisionskriterien erfüllen, Aktivieren des schützenden Abschirmungsmittels (30),
wobei das System (I; II) **dadurch gekennzeichnet ist, dass** das schützende Abschirmungsmittel (30) ein energieaufnehmendes Mittel (34) mit einer energieaufnehmenden Funktion in der Bewegungsrichtung des Fahrzeugs und ein bodenabstandverminderndes Mittel (32) mit einer bodenabstandvermindernden Funktion in der Bewegungsrichtung des Fahrzeugs umfasst,
wobei das System Mittel (100; 110; 200; 210) zum Ermitteln der Art der überwachten Objekte umfasst, und
Mittel (100; 130; 200; 230) zum Auswählen zwischen Aktivieren des energieaufnehmenden Mittels (34) und/oder Aktivieren des bodenabstandvermindernden Mittels (32), basierend auf der Art der überwachten Objekte.

4. System nach Anspruch 3, weiter umfassend Mittel (200; 240) zum automatischen Bremsen des Fahrzeugs, aber nur, wenn eine automatische Bremsfunktion des Fahrzeugs aktiviert worden ist.

5. Kraftfahrzeug, ausgestattet mit einem System nach einem der Ansprüche 3 bis 4.

## Revendications

1. Procédé destiné à influer sur les conséquences d'une collision en rapport avec un véhicule à moteur, comprenant l'étape consistant à surveiller (S1) des objets dans la direction de mouvement du véhicule comme base pour l'évaluation d'un risque de collision, et à utiliser ledit risque de collision comme base pour l'activation (S3) de moyens formant bouclier de protection (30) afin d'atténuer lesdites conséquences d'une collision, lesquels moyens formant bouclier de protection (30) sont situés à proximité de la partie avant et/ou arrière du véhicule, le procédé comprenant, en outre, l'étape consistant à décider si une collision est probable, en comparant les données de risque de collision avec les données de risque de collision prédéterminées et, lorsque lesdites données de risque de collision correspondent aux critères de collision spécifiés, à activer lesdits moyens formant bouclier de protection (30), **caractérisé en ce que** lesdits moyens formant bouclier de protection (30) comprennent des moyens d'absorption d'énergie (34) pour une fonction d'absorption d'énergie dans la direction de mouvement du véhicule et des moyens de réduction de la garde au sol (32) pour une fonction de réduction de la garde au sol dans la direction de mouvement du véhicule, le procédé comprenant, en outre, l'étape consistant à choisir entre activer lesdits moyens d'absorption d'énergie et/ou activer lesdits moyens de réduction de la garde au sol, lesdits moyens de réduction de la garde au sol étant basés sur le caractère desdits objets surveillés.

2. Procédé selon la revendication 1, tel que l'étape d'activation desdits moyens formant bouclier de protection (30) est mise en oeuvre uniquement lorsqu'une fonction de freinage automatique du véhicule a été activée.

3. Système (I; II) destiné à influer sur les conséquences d'une collision en rapport avec un véhicule à moteur (1), comprenant des moyens pour surveiller des objets dans la direction de mouvement du véhicule comme base pour l'évaluation d'un risque de collision et des moyens formant bouclier de protection (30), et pour utiliser ledit risque de collision comme base pour l'activation dudit moyen formant bouclier de protection (30) afin d'atténuer lesdites conséquences d'une collision, lesquels moyens formant bouclier de protection (30) sont situés à proximité de la partie avant et/ou arrière du véhicule, comprenant, en outre, des moyens (100; 120; 200; 220) pour décider si une collision est probable, en comparant les données de risque de collision avec les données de risque de collision prédéterminées et, lorsque lesdites données de risque de collision correspondent aux critères de collision spécifiés, pour activer lesdits moyens formant bouclier de protection (30), lequel système (I; II) est **caractérisé en ce que** lesdits moyens formant bouclier de protection (30) comprennent des moyens d'absorption d'énergie (34) pour une fonction d'absorption d'énergie dans la direction de mouvement du véhicule et des moyens de réduction de la garde au sol (32) pour une fonction de réduction de la garde au sol dans la direction de mouvement du véhicule, ledit système comprenant des moyens (100; 110; 200; 210) pour déterminer le caractère desdits objets surveillés, des moyens (100; 130; 200; 230) pour choisir entre activer lesdits moyens d'absorption d'énergie (34) et/ou activer lesdits moyens de réduction de la garde au sol (32) sur la base du caractère desdits objets surveillés.

4. Système selon la revendication 3, comprenant, en outre, des moyens (200; 240) pour freiner automatiquement le véhicule, mais uniquement lorsqu'une fonction de freinage automatique du véhicule a été activée.

5. Véhicule à moteur équipé d'un système selon l'une quelconque des revendications 3-4.
